# EUROPEAN PATENT APPLICATION

(11) **EP 4 848 386 A1**
(43) Date of publication of application: **02.12.2026**
(21) Application number: 24920095.7
(22) Date of filing: 27.12.2024
(51) Int. Cl.: H01M 10/04, H01M 6/02, H01M 10/058

(54) **METHOD FOR MANUFACTURING SEALED BATTERY**

(30) Priority: 26.01.2024 JP 2024009852
(71) Applicant: Panasonic Intellectual Property Management Co., Ltd., Kadoma-shi, Osaka 571-0057 (JP)
(72) Inventor: FURUTA, Yohei, kadoma-shi, Osaka 571-0057 (JP); IZAWA, Keisuke, kadoma-shi, Osaka 571-0057 (JP); NAKAI, Mototsugu, kadoma-shi, Osaka 571-0057 (JP); HANDA, Rie, kadoma-shi, Osaka 571-0057 (JP)
(74) Representative: Eisenführ Speiser
(86) International application number: PCT/JP2024/046360
(87) International publication number: WO 2025/158872

(57) **Abstract**

This manufacturing process of a battery (10) comprises an aging step (S15) in which the battery (10) is stored at an ambient temperature equal to or higher than a room temperature, and a heat treatment step (S18) in which, after the aging step (S15), the battery (10) is stored at an ambient temperature higher than the ambient temperature of the aging step (S15), wherein a state of charge (SOC) of the battery (10) in the heat treatment step (S18) is lower than the SOC of the battery (10) in the aging step (S15).

## Description

### TECHNICAL FIELD

The present disclosure relates to a method for manufacturing a sealed battery.

### BACKGROUND ART

Cylindrical batteries are known examples of sealed batteries. A cylindrical battery has, for example, an electrode assembly, a bottomed cylindrical housing can in which the electrode assembly is housed, a sealing assembly that closes an opening end portion of the housing can, and a gasket provided between the housing can and the sealing assembly (see, for example, PATENT LITERATURE 1). In a method for manufacturing such a cylindrical battery, the sealing assembly is crimped and fixed to the opening end portion of the housing can via the gasket.

### CITATION LIST

### PATENT LITERATURE

PATENT LITERATURE 1: Japanese Unexamined Patent Application Publication No. 2000-306557

### SUMMARY

However, in the manufacturing process of the cylindrical battery described above, a local processing load may act on the gasket due to fixation of the sealing assembly by crimping, causing a local strain in the gasket. In such a case, the sealing performance of the cylindrical battery may deteriorate due to breakage of the gasket.

Accordingly, it is an advantage of the present disclosure to provide a method for manufacturing a sealed battery that may relieve local strain in the gasket.

The method for manufacturing a sealed battery according to the present disclosure comprises: an aging step of storing the sealed battery at an environmental temperature greater than or equal to room temperature; and a heat treatment step of storing, after the aging step, the sealed battery at an environmental temperature higher than the environmental temperature in the aging step, wherein the environmental temperature of the sealed battery in the heat treatment step is higher than the environmental temperature of the sealed battery in the aging step, and a state of charge (SOC) of the sealed battery in the heat treatment step is lower than the SOC of the sealed battery in the aging step.

According to the method for manufacturing a sealed battery of the present disclosure, local strain in the gasket may be relieved.

### BRIEF DESCRIPTION OF DRAWING

FIG. 1 is an axial sectional view illustrating a sealed battery as an example of an embodiment.
FIG. 2 is a flowchart of a method for manufacturing a sealed battery as an example of an embodiment.

### DESCRIPTION OF EMBODIMENTS

An example of an embodiment of the present disclosure will be described in detail below. In the following description, specific shapes, materials, directions, numerical values, and the like are presented merely as examples to facilitate understanding of the present disclosure, and may be appropriately modified depending on the application, purpose, specifications, and other requirements.

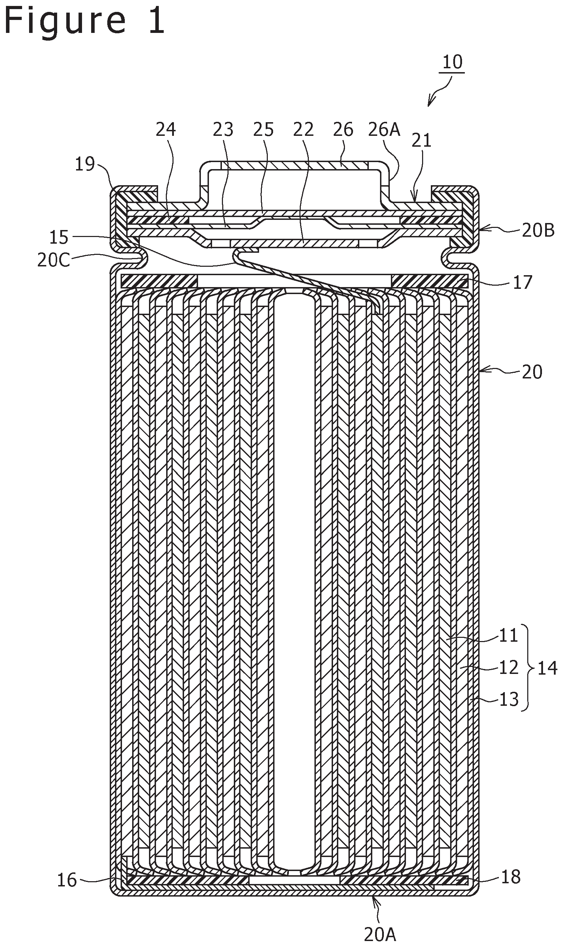

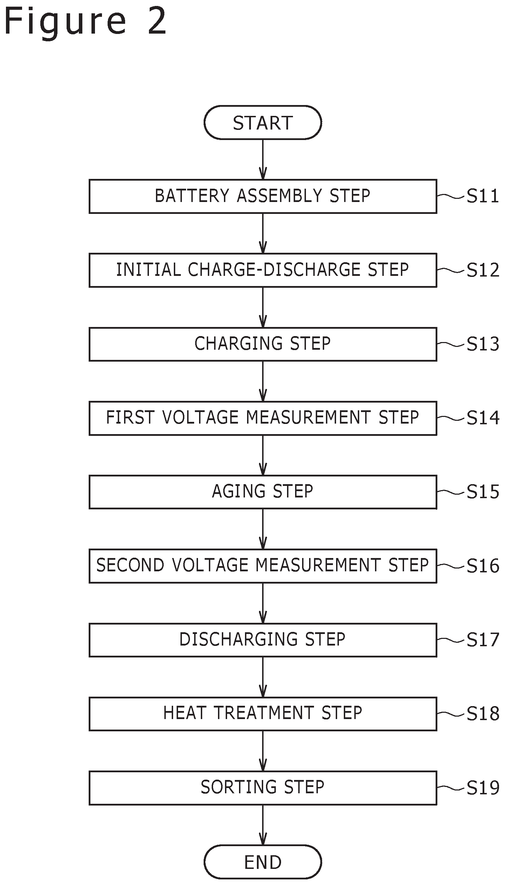

A method for manufacturing a battery 10 as an example of the embodiment will be described with reference to FIGS. 1 and 2.

As illustrated in FIG. 1, the battery 10 serving as a sealed battery is a non-aqueous electrolyte secondary battery (lithium-ion battery) using a non-aqueous electrolyte. However, the sealed battery of the present disclosure is not limited to the non-aqueous electrolyte secondary battery of the present embodiment, and may alternatively be a primary battery or a battery using an aqueous electrolyte. In addition, the battery 10 is a cylindrical battery. However, the sealed battery of the present disclosure is not limited to the cylindrical battery of the present embodiment, and may alternatively be a prismatic battery, a button battery, or a coin battery.

As illustrated in FIG. 2, the manufacturing process of the battery 10 includes a battery assembly step S11, an initial charge-discharge step S12, a charging step S13, a first voltage measurement step S14, an aging step S15, a second voltage measurement step S16, a discharging step S17, a heat treatment step S18, and a sorting step S19, and these steps are carried out in this order. The respective steps will be described below.

The battery assembly step S11 is a step of assembling the battery 10 illustrated, for example, in FIG. 1. Hereinafter, the axial direction, radial direction, and circumferential direction of the battery 10 may be used to describe each member. In addition, in the axial direction (height direction) of the battery 10, the side of a sealing assembly 21 may be referred to as the "upper" side, and the side of a bottom 20A of a housing can 20 may be referred to as the "lower" side.

First, a positive electrode 11 and a negative electrode 12 are spirally wound with a separator 13 interposed therebetween to produce an electrode assembly 14. The positive electrode 11 comprises a positive electrode current collector and a positive electrode mixture layer formed on at least one surface of the current collector. As the positive electrode current collector, a metal foil that is stable in the potential range of the positive electrode 11, such as aluminum or an aluminum alloy, or a film with such a metal disposed on a surface layer may be used. Preferably, the positive electrode mixture layer includes a positive electrode active material, a conductive agent such as acetylene black, and a binder such as polyvinylidene fluoride, and is formed on both surfaces of the positive electrode current collector. As the positive electrode active material, for example, a lithium-containing transition metal composite oxide is used. The positive electrode 11 can be produced by applying a positive electrode mixture slurry including the positive electrode active material, the conductive agent, the binder, and the like onto a positive electrode current collector, drying the coating, and then compressing the coating to form positive electrode mixture layers on both surfaces of the positive electrode current collector.

The negative electrode 12 comprises a negative electrode current collector and a negative electrode mixture layer formed on at least one surface of the current collector. As the negative electrode current collector, a metal foil that is stable in the potential range of the negative electrode 12, such as copper or a copper alloy, or a film with such a metal disposed on a surface layer may be used. Preferably, the negative electrode mixture layer includes a negative electrode active material and a binder such as styrene-butadiene rubber (SBR), and is formed on both surfaces of the negative electrode current collector. As the negative electrode active material, for example, graphite or a silicon-containing compound is used. The negative electrode 12 can be produced by applying a negative electrode mixture slurry including the negative electrode active material, the binder, and the like onto a negative electrode current collector, drying the coating, and then rolling the coating to form negative electrode mixture layers on both surfaces of the current collector.

As the separator 13, for example, a porous sheet having ion permeability and insulation properties is used. Specific examples of the porous sheet include microporous films, woven fabrics, and nonwoven fabrics. The separator 13 is suitably made of materials including olefin resins such as polyethylene and polypropylene and cellulose. The separator 13 may be a layered structure with a cellulose fiber layer and a thermoplastic resin fiber layer containing olefin resin. Alternatively, the separator 13 may be a multilayer separator including a polyethylene layer and a polypropylene layer. The surface of the separator 13 may be coated with materials such as aramid resin and ceramic.

Next, the electrode assembly 14 together with the lower insulating plate 18 is inserted into a bottomed cylindrical housing can 20 formed by drawing a steel plate, and the inner surface of a bottom 20A of the housing can 20 is welded to the negative electrode lead 16. The negative electrode lead 16, which is attached to the negative electrode 12, extends to the bottom 20A of the housing can 20 through the outside of the lower insulating plate 18. The negative electrode lead 16 is connected, for example by welding, to the inner surface of the bottom 20A of the housing can 20, and the bottom 20A of the housing can 20 serves as the negative electrode external terminal.

Next, the upper insulating plate 17 is inserted into the housing can 20, and a groove is formed in an opening end portion 20B of the housing can 20 to form a grooved portion 20C. The grooved portion 20C is formed by a part of a side surface portion near the opening end portion 20B of the housing can 20 being protruded inward, the upper surface of which supports a sealing assembly 21. The grooved portion 20C is preferably formed annularly along the circumferential direction of the housing can 20.

Next, the gasket 19 is inserted into the opening end portion 20B of the housing can 20 and placed on the upper surface of the grooved portion 20C. The gasket 19 may be made of an elastic insulating resin. Examples of such resin include polyethylene (PE), polypropylene (PP), polybutylene terephthalate (PBT), polyphenylene sulfide (PPS), perfluoroalkoxy fluororesin (PFA), and nylon.

Next, an internal terminal plate 22 of the sealing assembly 21, described later, is welded to a positive electrode lead 15. The positive electrode lead 15, which is attached to the positive electrode 11, extends toward the sealing assembly 21 through a through-hole of the upper insulating plate 17. The positive electrode lead 15 is connected, for example by welding, to a lower surface of the internal terminal plate 22, a bottom plate of the sealing assembly 21. A cap 26, a top plate of the sealing assembly 21 electrically connected to the internal terminal plate 22, serves as the positive electrode external terminal.

Next, a non-aqueous electrolyte is injected into the housing can 20. The non-aqueous electrolyte includes a non-aqueous solvent and an electrolyte salt dissolved in the non-aqueous solvent. Examples of the non-aqueous solvent include esters, ethers, nitriles, amides, and mixed solvents of two or more thereof. The non-aqueous solvent may contain a halogen-substituted product in which at least some hydrogen atoms of these solvents are replaced with a halogen atom such as a fluorine atom. The non-aqueous electrolyte is not limited to a liquid electrolyte and may be a solid electrolyte. Examples of the electrolyte salt include lithium salts such as LiPF₆. The type of electrolyte is not particularly limited and may be an aqueous electrolyte.

Next, the sealing assembly 21 is inserted into the gasket 19, and the opening end portion 20B of the housing can 20 is crimped to the sealing assembly 21 to fix the sealing assembly 21 by crimping. The sealing assembly 21 has a structure in which an internal terminal plate 22, a lower vent member 23, an insulating member 24, an upper vent member 25, and a cap 26 are stacked in the order from the side of the electrode assembly 14. Each member forming the sealing assembly 21 is, for example, disk-shaped or ringshaped, and the members except for the insulating member 24 are electrically connected to each other. The lower vent member 23 and the upper vent member 25 are connected to each other at the respective central portions, and the insulating member 24 is interposed between peripheral edge portions of these vent members. When the internal pressure of the battery 10 increases due to abnormal heat generation, the lower vent member 23 deforms and ruptures in a manner pushing up the upper vent member 25 toward the cap 26, thereby interrupting a current path between the lower vent member 23 and the upper vent member 25. When the internal pressure further increases, the upper vent member 25 ruptures, and gas is discharged from the vent hole 26A of the cap 26.

In the battery assembly step S11, a local processing load may act on the gasket 19 due to fixation of the sealing assembly 21 by crimping as described above, causing local strain in the gasket 19. In such a case, the gasket 19 may be at risk of breakage. Although the details will be described later, local strain generated in the gasket 19 can be relieved in the heat treatment step S18.

The initial charge-discharge step S12 is a step of initially charging and discharging the battery 10. The initial charge and discharge is the first charge and discharge performed after the assembly of the battery 10.

In the initial charge and discharge, the battery 10 is preferably charged until the state of charge (SOC) reaches 100% and then discharged until the SOC reaches 0%. However, during the initial charge and discharge, the charging may be completed even when the SOC remains less than 100%. In addition, the discharging in the initial charge and discharge does not necessarily need to be performed until the SOC reaches 0%, but in order to improve the accuracy of subsequent voltage measurement of the battery 10, it is preferable that the SOC be discharged to at least less than or equal to 5%, more preferably to less than or equal to 1%, and still more preferably to 0%.

The charging step S13 is a step of constant-voltage charging or constant-voltage/constant-current charging of the battery 10. In the charging step S13, the battery 10 is charged until its SOC reaches 40%. However, in the charging step S13, the battery 10 may be charged until its SOC becomes higher than 40%.

The first voltage measurement step S14 is a step of measuring a voltage V1 of the battery 10 before the aging step S15.

The aging step S15 is a step of aging the battery 10 by storing the battery 10 at an environmental temperature greater than or equal to room temperature. The aging step S15 may be performed, for example, in a thermostatic chamber.

In the aging step S15, the SOC (hereinafter referred to as the aging SOC) of the battery 10 is the SOC (40%) charged in the charging step S13 described above. However, the aging SOC may be higher than 40% as described above.

In the aging step S15, the temperature at which the battery 10 is aged (hereinafter referred to as the aging environmental temperature) is set within a range of higher than 40°C and lower than 60°C. In the present embodiment, the aging environmental temperature is set to 45 ± 3°C. As a result, the battery characteristics can be stabilized.

In the aging step S15, the time for aging the battery 10 (hereinafter referred to as the aging time) is set to 56 hours. However, the aging time may be appropriately determined based on the specifications of the battery 10.

The second voltage measurement step S16 is a step of measuring a voltage V2 of the battery 10 after the aging step S15.

The discharging step S17 is a step of discharging the battery 10 until the SOC of the battery 10 reaches a discharged state. As used herein, the discharged state refers to a state in which the SOC of the battery 10 is less than or equal to 30%. The discharged state is set to an SOC lower than the aging SOC. In the present embodiment, in the discharging step S17, the battery 10 is discharged until the SOC of the battery 10 reaches 30%. However, in the discharging step S17, the battery 10 may be discharged until the SOC of the battery 10 becomes less than 30%. In the present embodiment, only the discharging step S17 is carried out before the heat treatment step S18 described later, but both the discharging step S17 and a charging step may be included before the heat treatment step S18.

The heat treatment step S18 is a step of heat-treating the battery 10 by storing the battery 10 at a temperature higher than the aging temperature. In the heat treatment step S18, local strain of the gasket 19 generated in the battery assembly step S11 described above can be relieved by heat-treating the battery 10. More specifically, by heat-treating the gasket 19, viscoelasticization of the crystals due to crystal relaxation of the resin forming the gasket 19 is promoted, and the strain of the gasket 19 can be relieved as the stress of the gasket 19 is relaxed. The aging step S15 may be performed, for example, in a thermostatic chamber.

In the heat treatment step S18, the SOC (hereinafter referred to as the heat-treatment SOC) of the battery 10 is the SOC (30%) discharged in the discharging step S17 described above. However, as described above, the heat-treatment SOC may be less than 30%. The heat-treatment SOC may also be less than or equal to 5%. In the heat treatment step S18, the heat-treatment SOC is set lower than the aging SOC as described above.

In the heat treatment step S18, the temperature at which the battery 10 is heat-treated (hereinafter referred to as the heat-treatment environmental temperature) is set higher than the aging environmental temperature. Specifically, in the heat treatment step S18, the heat-treatment environmental temperature is set within a range of higher than 60°C and lower than 100°C, preferably within a range of higher than 60°C and lower than 80°C. In the present embodiment, the heat-treatment environmental temperature is set to 65°C. However, the heat-treatment environmental temperature may be appropriately determined based on the material of the gasket 19.

In the heat treatment step S18, the time for heat-treating the battery 10 (hereinafter referred to as the heat treatment time) is set shorter than the aging time. In the heat treatment step S18, the heat-treatment time is set to greater than or equal to 24 hours. In the present embodiment, the heat treatment time is set to 48 hours.

The sorting step S19 is a step of determining a voltage difference ΔV between the voltage V1 measured in the first voltage measurement step S14 and the voltage V2 measured in the second voltage measurement step S16 and sorting the battery 10 based on the voltage difference ΔV. Sorting is performed, for example, by determining the battery 10 as a non-defective product when the voltage difference ΔV falls within a sorting criterion range, and as a defective product when the voltage difference ΔV falls outside the sorting criterion range.

It is to be understood that the present disclosure is not limited to the above-described embodiments and modifications thereof, and that various changes and improvements can be made within the scope of the claims set forth in the present application.

### REFERENCE SIGNS LIST

10 Battery, 11 Positive electrode, 12 Negative electrode, 13 Separator, 14 Electrode assembly, 15 Positive electrode lead, 16 Negative electrode lead, 17 Upper insulating plate, 18 Lower insulating plate, 19 Gasket, 20 Housing can, 20B Opening end portion, 20C Grooved portion, 21 Sealing assembly, 22 Inner terminal plate, 23 Lower vent member, 24 Insulating member, 25 Upper vent member, 26 Cap, 26A Vent hole, S11 Battery assembly step, S12 Initial charge-discharge step, S13 Charging step, S14 First voltage measurement step, S15 Aging step, S16 Second voltage measurement step, S17 Discharging step, S18 Heat treatment step, S19 Sorting step

## Claims

1. A method for manufacturing a sealed battery, comprising:
an aging step of storing the sealed battery at an environmental temperature greater than or equal to room temperature; and
a heat treatment step of storing, after the aging step, the sealed battery at an environmental temperature higher than the environmental temperature in the aging step;
wherein a state of charge (SOC) of the sealed battery in the heat treatment step is lower than the SOC of the sealed battery in the aging step.

2. The method for manufacturing a sealed battery according to claim 1,
wherein the sealed battery in the heat treatment step is in a discharged state.
